# EUROPEAN PATENT APPLICATION

(11) **EP 4 800 059 A1**
(43) Date of publication of application: **02.09.2026**
(21) Application number: 24882379.1
(22) Date of filing: 22.10.2024
(51) Int. Cl.: C08L 13/00, B60C 1/00, C08F 236/04, C08K 5/13, C08L 21/00

(54) **POLYMER COMPOSITION, CROSSLINKED OBJECT, TIRE, AND CONJUGATED-DIENE-BASED POLYMER**

(30) Priority: 23.10.2023 JP 2023182085; 19.04.2024 JP 2024068534
(71) Applicant: ENEOS Materials Corporation, Tokyo 105-7109 (JP)
(72) Inventor: TANI, Koichiro, Tokyo 105-7109 (JP)
(74) Representative: TBK
(86) International application number: PCT/JP2024/037577
(87) International publication number: WO 2025/089268

(57) **Abstract**

A polymer composition contains a conjugated diene-based polymer having a functional group; and an antioxidant. The conjugated diene-based polymer having a functional group includes, in the same molecule or different molecules thereof, a carboxy group and at least one nitrogen-containing group selected from the group consisting of a tertiary amino group, a nitrogen-containing aliphatic heterocyclic group, and a nitrogen-containing aromatic heterocyclic group.

## Description

### Technical Field

### [Cross-Reference to Related Applications]

The present application claims a priority from Japanese Patent Application No. 2023-182085 filed on October 23, 2023, and Japanese Patent Application No. 2024-68534 filed on April 19, 2024, the entirety of the disclosures of which is incorporated herein by reference.

The present disclosure relates to a polymer composition, to a cross-linked product, to a tire, and to a conjugated diene-based polymer.

### Background Art

Conjugated diene-based polymers produced through polymerization of a conjugated diene compound are excellent in terms of a variety of properties including heat resistance, wear resistance, mechanical strength, and moldability, and thus widely used in various industrial materials such as pneumatic tires, vibration-proof rubbers, and hoses.

In recent years, in a trend for shifting to electric vehicles and reducing fuel cost, there is increasing demand for further enhancing performance of tires, particularly wear resistance. In order to satisfy the demand, there have been developed, as a material of the rubber for producing automobile tires, a polymer and a polymer composition (rubber composition) having mechanical strength and wear resistance considerably higher than those of conventional rubber materials (see, for example, Patent Document 1).

Patent Document 1 discloses a carboxy-modified polymer produced by modifying a styrene-butadiene rubber with a nitrone compound having a carboxy group. By use of the polymer, wet grip performance and low rolling resistance, which are attributable to silica incorporated into a rubber composition, are improved. In addition, rubber strength is enhanced, and storage modulus and wear resistance of a rubber obtained from the rubber composition are improved.

### Prior Art Documents

### Patent Documents

Patent Document 1: Japanese Patent Application Laid-Open (kokai) No. 2016-175986

### Summary of the Invention

### Problems to be Solved by the Invention

A carboxy group-modified polymer is known to provide an ionomer via ionic bond with a metal element which ionomer exhibits high mechanical strength. Thus, in production of rubber products, the carboxy group-modified polymer is expected to be used as a high-strength rubber material. However, the carboxy group-modified polymer has concerns about easy adhesion onto a metallic part (such as a roller or a blade) of an apparatus employed in a kneading step or a molding step, and impairment in processability.

The present disclosure has been conceived in view of the foregoing. Thus, a main object of the disclosure is to provide a polymer composition that can provide a cross-linked product having high mechanical strength, while adhesion onto a metal surface is suppressed. Another object is to provide a conjugated diene-based polymer which is not easily adhered to a metal surface and exhibits high mechanical strength. Means for Solving the Problems

The present inventors have conducted extensive studies for solving the aforementioned problem, and have found that the problem can be solved by incorporating a carboxy group and a particular functional group into the same molecule or different molecules of a conjugated diene-based polymer. Specifically, the present disclosure provides the following polymer composition, cross-linked product, tire, and conjugated diene-based polymer.
[1] A polymer composition containing a conjugated diene-based polymer having a functional group and an antioxidant, wherein the conjugated diene-based polymer having a functional group has, in the same molecule or different molecules thereof, a carboxy group and at least one nitrogen-containing group selected from the group consisting of a tertiary amino group, a nitrogen-containing aliphatic heterocyclic group, and a nitrogen-containing aromatic heterocyclic group.
[2] A cross-linked product formed by cross-linking the polymer composition as recited in [1] above.
[3] A tire formed by applying the polymer composition as recited in [1] above.
[4] A conjugated diene-based polymer having a plurality of carboxy groups, and a plurality of at least one species selected from the group consisting of a tertiary amino group, a nitrogen-containing aliphatic heterocyclic group, and a nitrogen-containing aromatic heterocyclic group.

### Advantageous Effects of the Invention

According to the present disclosure, a polymer composition that can produce a cross-linked product having high mechanical strength can be provided, while adhesion of the composition to a metal surface is suppressed. In addition, a conjugated diene-based polymer which is not easily adhered to a metal surface and which has high mechanical strength can be provided.

### Modes for Carrying Out the Invention

Hereinafter, the elements in relation to carrying out the present disclosure will be described in detail. Notably, the present specification is not limited to the embodiments described below, and it should be understood that various variations which are carried out without changing the gist of the present disclosure are encompassed in the specification.

Notably, in the present specification, a numerical range expressed with "X to Y" refers to a range defined by X as a lower limit and Y as an upper limit. The term "(meth)acryl" refers to both "acryl" and "methacryl", and the term "(meth)acrylate" refers to both "acrylate" and "methacrylate".

### <<Polymer composition>>

The polymer composition of the present disclosure (hereinafter may also be referred to as "the present composition") contains a conjugated diene-based polymer having a functional group (hereinafter may also be referred to as a "component (A)") and an antioxidant (hereinafter may also be referred to as a "component (B)"). The present composition may further contain, as an optional component, an extending material (hereinafter may also be referred to as a "component (C)"). Hereinafter, the essential components and optional components contained in the present composition will be described.

### <Component (A): Conjugated diene-based polymers

The conjugated diene-based polymer serving as the component (A) (hereinafter may also be referred to as a "conjugated diene-based polymer (A)") includes a structural unit derived from a conjugated diene compound. The conjugated diene-based polymer (A) has, in the same molecule or different molecules thereof, a carboxy group and at least one functional group selected from the group consisting of a tertiary amino group, a nitrogen-containing aliphatic heterocyclic group, and a nitrogen-containing aromatic heterocyclic group (hereinafter may also be referred to as a "nitrogen-containing group").

### ·Nitrogen-containing group

A tertiary amino group is a group in which each of the three chemical bonds belonging to a nitrogen atom are bound to a carbon atom forming a hydrocarbon group. A group adjacent to the tertiary amino group may be saturated or unsaturated, or chain or cyclic. When the group adjacent to the tertiary amino group is cyclic, the adjacent cyclic group may have a hetero atom at a position differing from the bonding site with a nitrogen atom. Specifically, the tertiary amino group is preferably any of the groups represented by the following formula (1): 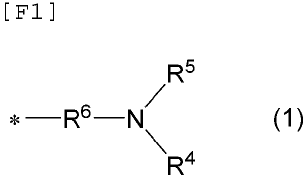 (wherein each of R⁴ and R⁵ independently represents a hydrocarbyl group; and R⁶ represents a hydrocarbylene group).

In the above formula (1), the hydrocarbyl group represented by R⁴ or R⁵ is preferably a C1 to C20 linear-chain or branched alkyl group, a C3 to C20 cycloalkyl group, a C6 to C20 aryl group, or a C7 to C20 aralkyl group.

The hydrocarbylene group represented by R⁶ is preferably a C1 to C20 linear-chain or branched alkanediyl group, a C3 to C20 cycloalkylene group, a C6 to C20 arylene group, or a C7 to C20 aralkylene group.

The nitrogen-containing aliphatic heterocyclic group is a group formed by removing m (m is an integer 1 or greater) hydrogen atoms from a nitrogen-containing aliphatic heterocyclic compound. Examples of the nitrogen-containing aliphatic heterocyclic compound include piperidine, piperazine, morpholine, oxazolidine, and 2-oxazolidinone. The nitrogen-containing aliphatic heterocyclic group may have a substituent at a ring moiety thereof. Examples of the substituent include a C1 to C12 alkyl group, a C1 to C12 alkoxy group, a C3 to C12 cycloalkyl group, a C6 to C12 aryl group, a C7 to C12 aralkyl group, a halogen atom, and a cyano group.

The nitrogen-containing aromatic heterocyclic group is a group formed by removing n (n is an integer 1 or greater) hydrogen atoms from a nitrogen-containing aromatic heterocyclic compound. Examples of the nitrogen-containing aromatic heterocyclic compound include monocyclic nitrogen-containing heterocyclic compounds such as pyridine, pyrimidine, pyrazine, imidazole, and triazole; and condensed ring nitrogen-containing heterocyclic compounds such as quinoline and naphthalidine. The nitrogen-containing aromatic heterocyclic group may have a substituent at a ring moiety thereof. Examples of the substituent include the same groups exemplified as the substituent which the nitrogen-containing aliphatic heterocyclic group may have.

By forming a cross-linking structure with a carboxy group, there can be obtained a polymer which exhibits adhesion resistance to a metal surface and has mechanical strength in a well-balanced manner. From this viewpoint, the nitrogen-containing aliphatic heterocyclic group preferably has a pyrimidine ring structure or a morpholine ring structure. For the same reason, the nitrogen-containing aromatic heterocyclic group preferably has a pyridine ring structure, a pyrimidine ring structure, or a pyrazine ring structure, more preferably a pyridine ring structure.

The conjugated diene-based polymer (A) preferably has a carboxy group and a nitrogen-containing group individually at side chains thereof. As used herein, the term "side chain" refers to a moiety branching from a main chain of the polymer. From the viewpoint of enhancing adhesion resistance to a metal surface and mechanical strength, the conjugated diene-based polymer (A) preferably has a plurality of carboxy groups and a plurality of nitrogen-containing groups, more preferably has a structural unit having a carboxy group (hereinafter may also be referred to as a "first structural unit") and a structural unit which has a nitrogen-containing group but is different from the first structural unit (hereinafter may also be referred to as a "second structural unit") in the same molecule or different molecules thereof.

Notably, the mode "in which the polymer (A) has a plurality of nitrogen-containing groups" includes a plurality of groups of only one species of a tertiary amino group, a nitrogen-containing aliphatic heterocyclic group, and a nitrogen-containing aromatic heterocyclic group, and two or three species in total of a tertiary amino group, a nitrogen-containing aliphatic heterocyclic group, and a nitrogen-containing aromatic heterocyclic group. As used herein, the expression "having a plurality of the particular functional group (in the present case, a nitrogen-containing group or a carboxy group)" refers to the state in which the number of particular functional groups as measured by means of a nuclear magnetic resonance (NMR) apparatus is twice or greater the number of molecules (unit: mol) calculated from the number average molecular weight (Mn) determined through gel permeation chromatography (GPC).

The conjugated diene-based polymer (A) is an assembly of polymers each including a structural unit derived from a conjugated diene compound (i.e., molecular assembly). The carboxy group and the nitrogen-containing group may belong to the same molecule or different molecules of the conjugated diene-based polymer (A). The specific embodiment of the conjugated diene-based polymer (A) includes the following embodiments.

First embodiment: a conjugated diene-based polymer (A) including a first polymer, and a second polymer which differs from the first polymer, wherein the first polymer is a conjugated diene-based polymer having a plurality of carboxy groups (hereinafter may also be referred to as a "conjugated diene-based polymer (A1)"), and the second polymer is a conjugated diene-based polymer having a plurality of nitrogen-containing groups (hereinafter may also be referred to as a "conjugated diene-based polymer (A2)").

Second embodiment: a conjugated diene-based polymer (A) including a conjugated diene-based polymer having a plurality of carboxy groups and a plurality of nitrogen-containing groups (hereinafter may also be referred to as a "conjugated diene-based polymer (A3)").

### (First embodiment)

### ·Conjugated diene-based polymer (A1)

No particular limitation is imposed on the method of synthesizing the conjugated diene-based polymer (A1). From the viewpoint of successfully simplifying the production steps, the conjugated diene-based polymer (A1) is preferably produced through a method including co-polymerization of a monomer having a carboxy group (hereinafter may also be referred to as a "carboxy group-containing monomer").

In consideration that the carboxy group-containing monomer is generally water-soluble, the polymerization method is preferably emulsion polymerization employing an aqueous medium as a polymerization medium. Emulsion polymerization may be conducted through a known technique. Specifically, **in** one polymerization method, a monomer is dispersed **in an** aqueous medium (preferably **in** water) **in** the presence of an emulsifier; polymerization is conducted **in** the presence of a polymerization initiator to a target polymerization conversion; and the polymerization is terminated by adding a polymerization terminator.

In production of the conjugated diene-based polymer (A1), a monomer mixture which includes a conjugated diene compound, a carboxy group-containing monomer, and an aromatic vinyl compound as an optional component is preferably used as a monomer.

Examples of the conjugated diene compound include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. Among them, at least one species of 1,3-butadiene, isoprene, and 2,3-dimethyl-1,3-butadiene is preferably used as the conjugated diene compound. The conjugated diene compound used **in** production of the conjugated diene-based polymer (A1) may be a single species or two or more species.

Examples of the carboxy group-containing monomer include (meth)acrylic acid, 3-vinylbenzoic acid, 4-vinylbenzoic acid, fumaric acid, and itaconic acid. The carboxy group-containing monomer used **in** production of the conjugated diene-based polymer (A1) may be a single species or two or more species.

Examples of the aromatic vinyl compound include styrene, 2-methylstyrene, 3-methylstyrene, 4-methylstyrene, α-methylstyrene, 2,4-dimethylstyrene, 2,4-diisopropylstyrene, 4-t-butylstyrene, 5-t-butyl-2-methylstyrene, vinylethylbenzene, divinylbenzene, trivinylbenzene, divinylnaphthalene, t-butoxystyrene, 2-ethylstyrene, 3-ethylstyrene, 4-ethylstyrene, 2-t-butylstyrene, 3-t-butylstyrene, vinylxylene, vinylnaphthalene, and diphenylethylene. Among them, the aromatic vinyl compound is preferably styrene or α-methylstyrene. The aromatic vinyl compound used in production of the conjugated diene-based polymer (A1) may be a single species or two or more species. Notably, in the present specification, the term "aromatic vinyl compound" does not encompass a compound having a nitrogen-containing group or a compound having a carboxy group. For example, in the present specification, the aromatic vinyl compound having a nitrogen-containing group is categorized to the "nitrogen-containing monomer" mentioned below.

From the viewpoint of yielding a cross-linked product having higher mechanical strength, the conjugated diene-based polymer (A1) preferably includes a structural unit derived from a conjugated diene compound and a structural unit derived from an aromatic vinyl compound. Also, when the conjugated diene-based polymer (A1) is a copolymer of a conjugated diene compound and an aromatic vinyl compound, the polymer (A1) preferably includes a random copolymerization part in which the conjugated diene compound and the aromatic vinyl compound are distributed at random, from the viewpoint of a balance in hysteresis loss between low temperature and high temperature can be improved.

The conjugated diene-based polymer (A1) preferably includes a structural unit derived from the conjugated diene compound in a relative amount of 50 to 99.5 mass%, with respect to all the monomer units forming the conjugated diene-based polymer (A1). The relative amount of the conjugated diene compound, with respect to all the monomer units forming the conjugated diene-based polymer (A1), is more preferably 55 mass% or more, still more preferably 60 mass% or more. Also, the relative amount of the conjugated diene compound, with respect to all the monomer units forming the conjugated diene-based polymer (A1), is more preferably 95 mass% or less, still more preferably 90 mass% or less.

From the viewpoint of achieving mechanical strength and reduced adherence to a metal surface in a well-balanced manner, the first structural unit content of the conjugated diene-based polymer (A1), with respect to all the monomer units forming the conjugated diene-based polymer (A1), is preferably 0.5 mass% or higher, more preferably 1 mass% or higher, still more preferably 2 mass% or higher. From the viewpoint of suppressing a decrease in mechanical strength, the first structural unit content of the conjugated diene-based polymer (A1), with respect to all the monomer units forming the conjugated diene-based polymer (A1), is preferably 30 mass% or lower, more preferably 25 mass% or lower, still more preferably 20 mass% or lower.

The relative amount of the structural unit derived from an aromatic vinyl compound in the conjugated diene-based polymer (A1), with respect to all the monomer units forming the conjugated diene-based polymer (A1), is preferably 0 to 50 mass%. From the viewpoint of yielding a cross-linked product having higher mechanical strength, the relative amount of the structural unit derived from an aromatic vinyl compound in the conjugated diene-based polymer (A1), with respect to all the monomer units forming the conjugated diene-based polymer (A1), is more preferably 1 mass% or more, still more preferably 5 mass% or more. Also, from the viewpoint of yielding a conjugated diene-based polymer achieving sufficient rubber elasticity, the relative amount of the structural unit derived from an aromatic vinyl compound in the conjugated diene-based polymer (A1), with respect to all the monomer units forming the conjugated diene-based polymer (A1), is more preferably 45 mass% or less, still more preferably 40 mass% or less. Notably, the relative amount of the structural unit derived from the aromatic vinyl compound in the polymer may be determined through ¹H-NMR.

Meanwhile, the conjugated diene-based polymer (A1) may have a carboxy group and a nitrogen-containing group. The relative amount of the nitrogen-containing group in the conjugated diene-based polymer (A1) is preferably smaller than that in the conjugated diene-based polymer (A2). More specifically, the second structural unit content of the conjugated diene-based polymer (A1), with respect to all the monomer units forming the conjugated diene-based polymer (A1), is preferably lower than 0.5 mass%, more preferably 0.2 mass% or lower.

Examples of the emulsifier include an anionic surfactant, a nonionic surfactant, and an amphoteric surfactant. For producing a stable emulsion dispersion, an anionic surfactant is generally used. Examples of the anionic surfactant which may be used include a C≥10 long-chain fatty acid salt, a rosin acid salt, and a benzene sulfonate salt having a linear-chain alkyl group. Specific examples include potassium or sodium salts of capric acid, lauric acid, myristic acid, palmitic acid, oleic acid, stearic acid, octyl benzenesulfonic acid, dodecyl benzenesuofonic acid, docecyl diphenyloxidesulfonic acid, and dodecyl diphenyl ether disulfonic acid. Also, a fluorine-containing surfactant may also be used. The emulsifier may be used singly or in combination of two or more species.

As a polymerization initiator, a radical polymerization initiator which is generally used in emulsion polymerization may be employed. Examples of the polymerization initiator which may be employed include organic peroxides such as benzoyl peroxide, lauroyl peroxide, tert-butylhydro peroxide, cumene hydroperoxide, pinane hydroperoxide, p-menthane hydroperoxide, trimethylbicycloheptyl hydroperoxide, di-tert-butyl peroxide, and dicumyl peroxide. Alternatively, there may also be used a diazo compound which is typically azobisisobutyronitrile, an inorganic peroxide which is typically potassium persulfate, and a redox-type catalyst which is typically a combination of any of the peroxides and ferrous sulfate.

The polymerization initiator may be used singly or in combination of two or more species. The amount of the polymerization initiator used is generally 0.01 parts by mass or more, with respect to the entire amount of monomers involved in polymerization as 100 parts by mass, preferably 0.05 to 1.0 parts by mass.

In polymerization, a chain-transfer agent may be used for adjusting the molecular weight of the conjugated diene-based polymer (A1). Examples of the chain-transfer agent include alkylmercaptan (e.g., tert-dodecylmercaptan or n-dodecylmercaptan), carbon tetrachloride, thioglycols, diterpene, terpinolene, a γ-terpinene, and α-methylstyrene dimer. The chain-transfer agent may be used singly or in combination of two or more species. The amount of the chain-transfer agent used is generally 0.05 parts by mass or more, with respect to the entire amount of the monomers involved in polymerization as 100 parts by mass, preferably 0.1 to 15 parts by mass.

In emulsion polymerization, an additive may be appropriately added. Examples of the additive which may be appropriately added include a chelating agent such as sodium ethylenediaminetetraacetate, glycine, and alanine; an electrolyte such as potassium chloride, sodium phosphate, potassium phosphate, and potassium sulfate; an activator such as sodium formaldehyde sulfooxylate, and ferrous sulfate; a pH-adjuster such as ammonia, sodium hydroxide, and potassium hydroxide; and an oxygen-remover such as styrenized phenol, hindered phenol, an imidazole, p-phenylenediamine, and sodium hydrosulfite.

In production of the conjugated diene-based polymer (A1) through emulsion polymerization, the polymerization may be conducted in a continuous manner or a batch manner. The polymerization is conducted in an oxygen-removed reactor generally at 0 to 100°C, preferably 0 to 80°C. The time of polymerization is preferably 1 to 24 hours, more preferably 2 to 12 hours. During the reaction, operational conditions including temperature and stirring, and the like may be appropriately modified.

In polymerization reaction, gelation may occur when the polymerization conversion rises. Therefore, the polymerization conversion is preferably adjusted to 85% or lower, more preferably 80% or lower, still more preferably 30 to 70%, where polymerization is terminated. Termination of polymerization may be achieved by adding a polymerization terminator when the polymerization conversion reaches a target level. Examples of the polymerization terminator include hydroxylamine compounds such as hydroxylamine and N,N-diethylhydroxylamine; and quinone compounds such as hydroquinone. After termination of polymerization, if required, unreacted monomers are removed from the reaction system through steam distillation or a similar method, to thereby yield a latex in which the conjugated diene-based polymer (A1) is dispersed in a dispersion medium.

In preparation of the present composition, the aforementioned latex as is may be used as an aqueous dispersion of the conjugated diene-based polymer (A1). Alternatively, an extending material for rubber is added to the above latex, to thereby form an oil-extended rubber containing the rubber extending material, and the thus-formed product in which the polymer (A1) is dispersed may also be used. Examples of the extending material include a process oil and vegetable oil. Examples of the process oil include a naphthene-based oil, a paraffin-based oil, and an aromatic oil. Specific examples of the process oil and the vegetable oil are the same as exemplified in relation to the description of the below-mentioned component (C). The amount of the extending material for forming oil-extended rubber is preferably 5 to 100 parts by mass, with respect to 100 parts by mass of the conjugated diene-based polymer (A1) contained **in** the latex, more preferably 10 to 60 parts by mass.

The procedure of recovering the conjugated diene-based polymer (A1) from the aqueous dispersion of the conjugated diene-based polymer (A1) may be conducted through a known method, for example, putting a latex into hot water **in** which a coagulant has been dissolved so as to precipitate the conjugated diene-based polymer (A1), and recovering the precipitated matter. In an alternative procedure, an antioxidant is added to the hot water **in** which a coagulant has been dissolved, and the latex is put into the hot water containing the antioxidant and the coagulant, to thereby precipitate the conjugated diene-based polymer (A1) and recover the precipitated matter. Thus, a polymer composition containing the conjugated diene-based polymer (A1) and the antioxidant is yielded.

### ·Conjugated diene-based polymer (A2)

No particular limitation is also imposed on the method of synthesizing the conjugated diene-based polymer (A2). From the viewpoint of successfully simplifying the production steps, the conjugated diene-based polymer (A2) is preferably produced by co-polymerizing a conjugated diene compound with a monomer having a nitrogen-containing group (hereinafter may also be referred to as a "nitrogen-containing monomer"). As a result, a conjugated diene-based polymer including the second structural unit can be easily yielded.

In production of the conjugated diene-based polymer (A2), a monomer mixture containing a conjugated diene compound serving as a monomer, a nitrogen-containing monomer, and an aromatic vinyl compound serving as an optional component is preferably used. Specific examples of the conjugated vinyl compound and the aromatic vinyl compound are the same as exemplified in relation to the description of the conjugated diene-based polymer (A1). Also, preferred ranges of the relative amount of the structural unit derived from the conjugated diene compound and that of the structural unit derived from the aromatic vinyl compound in the conjugated diene-based polymer (A2) are the same as described in relation to the conjugated diene-based polymer (A1).

As the nitrogen-containing monomer, a compound having a nitrogen-containing group and a polymerizable carbon-carbon double bond is preferably used. Specific examples of the nitrogen-containing monomer include, as a monomer having a tertiary amino group, (meth)acrylates such as dimethylaminoethyl (meth)acrylate, diethylaminoethyl (meth)acrylate, and (N,N-ethylmethylamino)ethyl (meth)acrylate; (meth)acrylamides such as dimethylaminoethyl(meth)acrylamide and diethylaminoethyl(meth)acrylamide; styrenes such as vinylbenzyldimethylamine, (4-vinylbenzyl) dimethylaminoethyl ether, N,N-dimethylaminomethylstyrene, and N,N-dimethylaminoethylstyrene; and diphenylethylenes such as 1-(4-N,N-dimethylaminophenyl)-1-phenylethylene.

Examples of the monomer having a nitrogen-containing aliphatic heterocyclic group include 1-(meth)acryloylpiperidine, 1-(meth)acryloylpiperazine, 4-(meth)acryloylmorpholine, and 3-(meth)acryloyl-2-oxazolidinone.

Examples of the monomer having a nitrogen-containing aromatic heterocyclic group include 2-vinylpyridine, 3-vinylpyridine, 4-vinylpyridine, 1-vinylimidazole, 1-vinyl-1,2,4-triazole, 5-vinylpyrimidine, 2-vinylpyrazine, and 2-vinylquinoline. The nitrogen-containing monomer may be used singly or in combination of two or more species in production of the conjugated diene-based polymer (A2).

From the viewpoint of achieving mechanical strength and reduced adherence to a metal surface in a well-balanced manner, the second structural unit content of the conjugated diene-based polymer (A2), with respect to all the monomer units forming the conjugated diene-based polymer (A2), is preferably 0.5 mass% or higher, more preferably 1 mass% or higher, still more preferably 2 mass% or higher. From the viewpoint of suppressing a decrease in mechanical strength, the second structural unit content of the conjugated diene-based polymer (A2), with respect to all the monomer units forming the conjugated diene-based polymer (A2), is preferably 30 mass% or lower, more preferably 20 mass% or lower, still more preferably 20 mass% or lower.

Meanwhile, the conjugated diene-based polymer (A2) may have a carboxy group and a nitrogen-containing group. The relative amount of the carboxy group in the conjugated diene-based polymer (A2) is preferably smaller than that in the conjugated diene-based polymer (A1). More specifically, the first structural unit content of the conjugated diene-based polymer (A2), with respect to all the monomer units forming the conjugated diene-based polymer (A2), is preferably lower than 0.5 mass%, more preferably 0.2 mass% or lower.

Examples of the polymerization method include emulsion polymerization, solution polymerization, bulk polymerization, and suspension polymerization. Among them, polymerization to form the conjugated diene-based polymer (A2) is preferably conducted through emulsion polymerization or solution polymerization. Emulsion polymerization may be conducted through a known technique. Specifically, in one polymerization method, a monomer is dispersed in an aqueous medium (preferably in water) in the presence of an emulsifier; polymerization is conducted in the presence of a polymerization initiator to a target polymerization conversion; and the polymerization is terminated by adding a polymerization terminator. Details of the emulsion polymerization may be referred to the description in relation to the conjugated diene-based polymer (A1).

When the conjugated diene-based polymer (A2) is produced through solution polymerization, one specific example of the polymerization method is polymerizing a monomer or monomers including a conjugated diene compound in an organic solvent in the presence of a polymerization initiator and an optionally used vinyl group content-adjusting agent (i.e., a randomizer). In solution polymerization, the format of polymerization may be a batch manner or a continuous manner. Specific examples of the polymerization method include simultaneous addition of an organic solvent, a polymerization initiator, and a monomer or monomers in a one batch manner, and continuous or intermittent addition of an organic solvent, a polymerization initiator, and a monomer or monomers to a reactor in a divided manner. The polymerization may be conducted through anion polymerization or radical polymerization.

In the case of anion polymerization, at least one species selected from the group consisting of an alkali metal compound and an alkaline earth metal compound is preferably used as a polymerization initiator. Specific examples thereof include alkyllithium, 1,4-dilithiobutane, phenyllithium, stilbenelithium, naphthyllithium, 1,3-bis(1-lithio-1,3-dimethylpentyl)benzene, 1,3-phenylenebis(3-methyl-1-phenylpentylidene)dilithium, naphthylsodium, naphthylpotassium, di-n-butylmagnesium, di-n-hexylmagnesium, ethoxypotassium, and calcium stearate. Specific examples of the alkyllithium include methyllithium, ethyllithium, n-propyllithium, n-butyllithium, sec-butyllithium, and t-butyllithium. The polymerization initiator is preferably a lithium compound. In the polymerization, the relative amount of the polymerization initiator used (the total amount in the case of using two or more monomers), with respect to 100 g of the monomer(s) employed in polymerization, is preferably 0.05 to 20 mmol.

Alternatively, the polymerization reaction may be performed in the presence of a compound obtained by mixing at least one species selected from the group consisting of an alkali metal compound and an alkaline earth metal compound and an initiation terminal modifier (hereinafter may also be referred to as a "metal amide compound"). By conducting polymerization of a monomer or monomers in the presence of a metal amide compound, a functional group derived from the initiation terminal modifier can be incorporated into a polymerization initiation end of the conjugated diene-based polymer. As the initiation terminal modifier, a nitrogen-containing compound such as a secondary amine compound is preferably used.

The vinyl group content-adjusting agent (i.e., a randomizer) is used for the purpose of adjusting the vinyl group content of the polymer (i.e., a vinyl bond content) and for other reasons. Examples of the randomizer include dimethoxybenzene, tetrahydrofuran, dimethoxyethane, diethylene glycol dibutyl ether, diethylene glycol dimethyl ether, 2,2-di(tetrahydrofuryl)propane, 2-(2-ethoxyethoxy)-2-methylpropane, triethylamine, pyridine, N-methylmorpholine, and tetramethylethylenediamine. The randomizer may be used singly or in combination of two or more species.

The organic solvent employed in polymerization is essentially an organic solvent inert to the relevant reaction. Examples of the organic solvent include chain or cyclic aliphatic hydrocarbons, and aromatic hydrocarbons. The organic solvent employed in polymerization is preferably a C3 to C8 hydrocarbon. Specific examples thereof include propane, n-butane, isobutane, n-pentane, isopentane, n-hexane, cyclohexane, propene, 1-butene, isobutene, trans-2-butene, cis-2-butene, 1-hexene, 2-hexene, benzene, toluene, xylene, ethylbenzene, heptane, cyclopentane, methylcyclopentane, methylcyclohexane, 1-pentene, 2-pentene, and cyclohexene. The above organic solvents may be used singly or in combination of two or more species.

When solution polymerization is employed, from the viewpoint of maintaining balance between productivity and ease of controlling polymerization, the monomer concentration of reaction solvent is preferably 5 to 50 mass%, more preferably 10 to 30 mass%. The polymerization reaction temperature is preferably -20°C to 150°C, more preferably 0 to 120°C. Also, the polymerization reaction is preferably performed at a pressure enough to maintain the monomer(s) to substantially a liquid phase. Through the aforementioned polymerization reaction, a conjugated diene-based polymer having an active end (more specifically, an alkali metal active end or an alkaline earth metal active end) can be yielded. As used herein, the term "active end" refers to as a portion other than a structure which is derived from a monomer having a carbon-carbon double bond and which is present at an end of the molecular chain (more specifically, a metallic end).

For terminating polymerization reaction, a polymerization terminator such as an alcohol (e.g., methanol, 2-propanol, or octanol) may be added to the reaction system. Alternatively, by reacting the active and of the conjugated diene-based polymer formed through the aforementioned polymerization with a termination terminal modifier, a structure derived from the termination terminal modifier may be incorporated into a polymerization termination end of the conjugated diene-based polymer. Examples of the termination terminal modifier include a compound which has at least one element selected from the group consisting of nitrogen, phosphorus, oxygen, sulfur, and silicon and no active hydrogen and which can react with an active end of the conjugated diene-based polymer formed through the aforementioned polymerization. Alternatively, through reaction of an active end of the conjugated diene-based polymer formed through the aforementioned polymerization with a coupling agent, the molecular weight and Mooney viscosity of the conjugated diene-based polymer (A2) may be controlled. Specific examples of the coupling agent include 2,4-tolylene diisocyanate, diphenylmethane diisocyanate, N,N,N',N'-tetramethylphthalamide, N,N,N',N'-tetramethyl-4,4'-diaminobenzophenone, tin tetrachloride, and silicon tetrachloride.

In the case of producing the conjugated diene-based polymer (A2) through radical polymerization, a radical polymerization initiator generally employed in radical polymerization may be used as a polymerization initiator. Examples of the organic solvent include a chain or cyclic aliphatic hydrocarbon and aromatic hydrocarbon.

In addition to the aforementioned method of producing the modified conjugated diene-based polymer (A2), a method, for example, the following method is employable. Specifically, an active moiety is formed at an unsaturated bond moiety or a functional group moiety of the conjugated diene-based polymer formed through polymerization of a monomer including a conjugated diene compound, and then, the thus-formed active moiety is reacted with a reactive compound having a nitrogen-containing group. Examples of the reactive compound having a nitrogen-containing group include 1,2,4,5-tetrazine and 3,6-di(2-pyridyl)-1,2,4,5-tetrazine.

Specific examples include the following two methods: (i) a method including hydrometallation of a double bond (i.e., vinyl group) present in a structural unit derived from the conjugated diene compound in the polymer, and subsequently, reacting the conjugated diene-based polymer with a reactive compound; and (ii) a method including lithiation of at least one of the allyl position of the structural unit derived from the conjugated diene compound in the conjugated diene-based polymer, and the benzyl position of the aromatic ring in the structural unit derived from an aromatic vinyl compound, and subsequently, reacting the conjugated diene-based polymer with a reactive compound.

The 1,2-vinyl group content of the conjugated diene-based polymer (A2) (hereinafter may also be referred to as a "vinyl group content") is preferably 15 mass% or higher, more preferably 20 mass% or higher. When the vinyl group content is 15 mass% or higher, suitable wet grip characteristic is generally secured. Also, the vinyl group content is preferably 70 mass% or lower. When the vinyl group content is 70 mass% or lower, suitable fuel efficiency can be generally secured. From such a viewpoint, the vinyl group content of the conjugated diene-based polymer (A2) is more preferably 60 mass% or lower, still more preferably 50 mass% or lower. As used herein, the term "vinyl group content" refers to a relative amount of a structural unit having a 1,2-bond, with respect to all the structural units in butadiene forming the conjugated diene-based polymer. The value is determined through ¹H-NMR.

The weight average molecular weight (Mw) (as reduced to polystyrene) of the conjugated diene-based polymer (A2) as determined through GPC is preferably 1.0×10⁵ or higher. When the Mw is 1.0×10⁵ or higher, generally, shape stability, tensile strength, and wear resistance of a cross-linked product can be satisfactorily enhanced. The Mw of the conjugated diene-based polymer (A2) is more preferably 1.2×10⁵ or higher, still more preferably 1.5×10⁵ or higher. Also, the Mw of the conjugated diene-based polymer (A2) is preferably 3.0×10⁶ or lower. When the Mw is 3.0×10⁶ or higher, processability of the polymer composition tends to easily decrease. The Mw of the conjugated diene-based polymer (A2) is more preferably 2.5×10⁶ or lower, still more preferably 2.0×10⁶ or lower. Notably, the weight average molecular weight (Mw) of the conjugated diene-based polymer refers to a value determined from all the peaks included in the GPC curve obtained through GPC (i.e., total weight average molecular weight).

The molecular weight distribution (Mw/Mn) of the conjugated diene-based polymer (A2), which is represented by a ratio of weight average molecular weight (Mw) to number average molecular weight (Mn) (the molecular weights being determined through GPC and reduced to polystyrene), is preferably 1.05 to 4.00. When the Mw/Mn is 1.05 or greater, processability in production of a cross-linked product can be suitably maintained, and dispersibility of a filler, rolling resistance (low fuel consumption), and tensile characteristics can be generally enhanced. The Mw/Mn of the conjugated diene-based polymer (A2) is more preferably 1.10 or greater, still more preferably 1.20 or greater. When the Mw/Mn of the conjugated diene-based polymer (A2) is 4.00 or lower, low fuel consumption exerted by a cross-linked product, and dispersibility of a filler can be generally maintained at a suitable state. The Mw/Mn of the conjugated diene-based polymer (A2) is more preferably 3.50 or lower, still more preferably 3.00 or lower.

According to the polymer composition which contains the conjugated diene-based polymer (A1) and the conjugated diene-based polymer (A2), conceivably, the carboxy group of the conjugated diene-based polymer (A1) and the nitrogen-containing group of the conjugated diene-based polymer (A2) form a bond attributed to electrostatic interaction (specifically, a hydrogen bond or an ionic bond), whereby polymer molecules together form a cross-linking structure, yielding a cross-linked product having high mechanical strength, while adhesion resistance to a metal surface is secured. From the viewpoint of yielding a cross-linked product having high mechanical strength, while adhesion resistance to a metal surface is secured, the ratio of the conjugated diene-based polymer (A2) to the conjugated diene-based polymer (A1) in the present composition is preferably such that the conjugated diene-based polymer (A2) content, with respect to 100 parts by mass of the conjugated diene-based polymer (A1), is adjusted to 5 to 200 parts by mass. From the viewpoint of successfully yielding a cross-linked product having higher mechanical strength, the conjugated diene-based polymer (A2) content, with respect to 100 parts by mass of the conjugated diene-based polymer (A1), is more preferably 150 parts by mass or lower, still more preferably 100 parts by mass or lower. Also, from the viewpoints of satisfactorily achieving the effects of improving adhesion resistance to a metal surface and enhancing the mechanical strength of a cross-linked product by virtue of incorporation of the conjugated diene-based polymer (A2), the conjugated diene-based polymer (A2) content, with respect to 100 parts by mass of the conjugated diene-based polymer (A1), is more preferably 10 parts by mass, still more preferably 20 parts by mass.

### (Second embodiment)

### ·Conjugated diene-based polymer (A3)

No particular limitation is imposed on the method of synthesizing the conjugated diene-based polymer (A3). From the viewpoint of successfully simplifying the production steps, the conjugated diene-based polymer (A3) is preferably produced through a method including co-polymerization of a conjugated diene compound, a carboxy group-containing monomer, and a nitrogen-containing monomer.

In consideration that the carboxy group-containing monomer is generally water-soluble, the polymerization method is preferably emulsion polymerization employing an aqueous medium as a polymerization medium. Emulsion polymerization may be conducted through a known technique. Specifically, in one polymerization method, a monomer mixture containing a conjugated diene compound, a carboxy group-containing monomer, a nitrogen-containing monomer, and optional aromatic vinyl compound is dispersed in an aqueous medium (preferably in water) in the presence of an emulsifier; polymerization is conducted in the presence of a polymerization initiator to a target polymerization conversion; and the polymerization is terminated by adding a polymerization terminator. Details of the emulsion polymerization are the same as those described in relation to the conjugated diene-based polymer (A1).

Specific examples of the conjugated vinyl compound and the aromatic vinyl compound used in production of the conjugated diene-based polymer (A3) are the same as the compounds exemplified in relation to the description of the conjugated diene-based polymer (A1). In the conjugated diene-based polymer (A3), the preferred relative amount of the structural unit derived from the conjugated diene compound and that of the structural unit derived from the aromatic vinyl compound are the same as the preferred ranges described in relation to the conjugated diene-based polymer (A1). Also, specific examples of the carboxy group-containing monomer and the nitrogen-containing monomer are the same compounds as exemplified in relation to the conjugated diene-based polymers (A1) and (A2).

From the viewpoint of achieving mechanical strength and reduced adherence to a metal surface in a well-balanced manner, the first structural unit content of the conjugated diene-based polymer (A3), with respect to all the monomer units forming the conjugated diene-based polymer (A3), is preferably 0.5 mass% or higher, more preferably 1 mass% or higher, still more preferably 2 mass% or higher. From the viewpoint of suppressing a decrease in mechanical strength, the first structural unit content of the conjugated diene-based polymer (A3), with respect to all the monomer units forming the conjugated diene-based polymer (A3), is preferably 15 mass% or lower, more preferably 10 mass% or lower.

From the viewpoint of achieving mechanical strength and reduced adherence to a metal surface in a well-balanced manner, the second structural unit content of the conjugated diene-based polymer (A3), with respect to all the monomer units forming the conjugated diene-based polymer (A3), is preferably 0.5 mass% or higher, more preferably 1 mass% or higher, still more preferably 2 mass% or higher. From the viewpoint of suppressing a decrease in mechanical strength, the second structural unit content of the conjugated diene-based polymer (A3), with respect to all the monomer units forming the conjugated diene-based polymer (A3), is preferably 25 mass% or lower, more preferably 20 mass% or lower, still more preferably 15 mass% or lower.

According to the polymer composition which contains the conjugated diene-based polymer (A3), conceivably, the carboxy group and the nitrogen-containing group of the conjugated diene-based polymer (A3) form a cross-linking structure in a polymer molecule or between polymer molecules, thereby yielding a cross-linked product having high mechanical strength, while adhesion resistance to a metal surface is secured.

### <Component (B): Antioxidant>

As the antioxidant, which is a component (B), there can be used a known additive incorporated into rubber for degradation of vulcanized rubber by oxygen, ozone, heat, etc. Examples of the antioxidant include a quinoline-based antioxidant, an amine-based antioxidant, a phenol-based antioxidant, a sulfur-containing antioxidant, and a phosphorus-containing antioxidant.

Specific examples of the antioxidant include, as the quinoline-based antioxidant, 2,2,4-trimethyl-1,2-dihydroquinoline oligomers (e.g., dimer, trimer, and tetramer), 6-ethoxy-2,2,4-trimethyl-1,2-dihydroquinoline, and 6-anilino-2,2,4-trimethyl-1,2-dihydroquinoline. Examples of the amine-based antioxidant include N-(1,3-dimethylbutyl)-N'-phenyl-p-phenylenediamine, N,N'-bis(1,4-dimethylpentyl)-p-phenylenediamine, N,N'-bis(1-ethyl-3-methylpentyl)-p-phenylenediamine, N,N'-dicyclohexyl-p-phenylenediamine, N,N'-di-2-naphtyl-p-phenylenediamine, N-isopropyl-N'-p-phenylenediamine, phenyl-α-naphtylamine, 4,4'-dioctyldiphenylamine, styrenized diphenylamine, poly(2,2,4-trimethyl-1,2-dihydroquinoline), 6-ethoxy-2,2,4-trimethyl-1,2-dihydroquinoline, and 4,4'-bis(α,α'-dimethylbenzyl)diphenylamine. Examples of the phenol-based antioxidant include 2,6-di-t-butyl-4-methylphenol, styrenized phenol, distyrenized phenol, 2,2'-methylenebis(4-methyl-6-tert-butylphenol), 2,2'-methylenebis(4-ethyl-6-tert-butylphenol), octadecyl 3-(3,5-di-tert-butyl-4-hydrdoxyphenyl)propionate, and pentaerythritol tetrakis(3,5-di-tert-butyl-4-hydroxyphenyl)propionate. Examples of the sulfur-containing antioxidant include a thiol compound and a sulfide compound (e.g., pentaerythrityl tetrakis(3-laurylthiopropionate). Examples of the phosphorus-containing antioxidant include a phosphite compound.

The antioxidant content of the present composition is preferably 0.1 to 10 parts by mass, with respect to 100 parts by mass of the conjugated diene-based polymer (A). By adjusting the antioxidant content to 0.1 parts by mass or higher, the effect of suppressing degradation of the cross-linked product formed from the polymer composition can be satisfactorily attained. Also, when the antioxidant content is adjusted to 10 parts by mass or lower, a drop in mechanical strength or wear resistance possibly occurs due to the presence of an excess amount of the antioxidant, can be suppressed. From these viewpoints, the antioxidant content, with respect to 100 parts by mass of the conjugated diene-based polymer (A), is more preferably 0.2 parts by mass or higher. Also, the antioxidant content, with respect to 100 parts by mass of the conjugated diene-based polymer (A), is more preferably 8 parts by mass or lower, still more preferably 7 parts by mass or lower. The antioxidant may be used singly or in combination of two or more species.

### <Component (C): Extending material>

The extending material, corresponding to component (C), is a component added so as to regulate Mooney viscosity or the like of a polymer composition, to thereby improve processability of the polymer composition. Examples of the extending material include at least one species selected from the group consisting of process oil, vegetable oil, resin, and liquid polymer.

### ·Process oil

As the process oil, a known oil generally used for extending elastomer may be employed. Examples of preferred process oils include an aromatic oil, a paraffin-based oil, a naphthene-based oil, and an oil having low polycyclic aromatic compound content (i.e., a low-PCA oil); such as a mild extraction solvate (MES), a treated distillate aromatic extract (TDAE), and a special residual aromatic extract (SRAE); and heavy naphthene oil. Examples of commercial products of MES, TDAE, and SRAE include Catenex SNR (heavy paraffin obtained by dewaxing a distillate with solvent, product of Shell) as MES; Vivatec 500 (product of H&R Wasag AG) as TDAE; and NC140 (product of Japan Energy Corp.) as SRAE. These process oils may be used singly or in combination of two or more species.

### ·Vegetable oil

Examples of the vegetable oil include soy bean oil, sunflower oil, castor oil, cottonseed oil, linseed oil, rapeseed oil, palm oil, coconut oil, pine oil, corn oil, safflower oil, olive oil, and Jojoba oil. These vegetable oils may be used singly or in combination of two or more species.

In the case where the present composition contains a process oil or a vegetable oil or both, the total amount of the process oil and the vegetable oil in the present composition, with respect to 100 parts by mass of the conjugated diene-based polymer (A) contained in the present composition, is preferably 0.05 to 50 parts by mass, from the viewpoint of achieving suitable processability, while a drop in low rolling resistance and mechanical strength is suppressed. The total amount of the process oil and the vegetable oil in the present composition, with respect to 100 parts by mass of the conjugated diene-based polymer (A), is more preferably 0.1 parts by mass or more, still more preferably 0.2 parts by mass or more. Also, the total amount of the process oil and the vegetable oil in the present composition, with respect to 100 parts by mass of the conjugated diene-based polymer (A), is more preferably 47 parts by mass or less, still more preferably 45 parts by mass or less.

### ·Resin

The present composition may contain a thermoplastic or thermosetting resin (hereinafter may also be referred to simply as a "resin (C)"). From the viewpoint of yielding a vulcanized rubber exhibiting various excellent properties (i.e., mechanical strength, wear resistance, and resistance to crack propagation property), the resin (C) is preferably at least one species selected from a styrene-based resin, polyethylene, a C5-type resin, a C9-type resin, a C5/C9-type resin, a dicyclopentadiene-based resin, a dicyclopentadiene/C9-type resin, an alkylphenol-based resin, and a terpene-based resin. From the viewpoint of achieving a high effect of improving various properties (i.e., mechanical strength, wear resistance, and resistance to crack propagation property), a thermoplastic resin is particularly preferably used as the resin (C). The resin (C) may be used singly or in combination of two or more species.

Meanwhile, the styrene-based resin is a polymer obtained from a styrene-based monomer. Among such polymers, preferred is a polymer which includes a structural unit derived from a styrene-based monomer in a relative amount of 20 mol% or more, with respect to the total amount of the monomer units included in the styrene-based resin. Examples of the styrene-based monomer include styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, and p-chlorostyrene. Among them, the styrene-based monomer is preferably at least one of styrene and α-methylstyrene.

The styrene-based resin may be a homopolymer formed by polymerizing one single styrene-based monomer, or a copolymer formed by co-polymerizing two or more species of styrene-based monomers. Also, the styrene-based resin may be a copolymer formed by use of a styrene-based monomer and an additional monomer which can copolymerize with the styrene-based monomer. Examples of the additional monomer include acrylonitriles such as acrylonitrile and methacrylonitrile; unsaturated carboxylic acids such as an acrylic compound and methacrylic acid; unsaturated carboxylate esters such as methyl acrylate and methyl methacrylate; dienes such as chloroprene and butadieneisoprene; olefins such as 1-butene and 1-pentene; and α,β-unsaturated carboxylic acid or an anhydride thereof such as maleic anhydride.

The softening point of the styrene-based resin is preferably 30°C or higher, more preferably 60°C or higher, still more preferably 80°C or higher. When the softening point is 30°C or higher, the effect of improving the anti-crack-propagation property of the cross-linked product obtained from the present composition tends to be easily attained. The softening point of the styrene resin is preferably 160°C or lower, more preferably 130°C or lower, still more preferably 100°C or lower. When the softening point is 160°C or lower, dispersibility of the resin is enhanced. In this case, anti-crack-propagation property, wear resistance, and breaking strength can be readily improved. Notably, in the present specification, the softening point of the styrene resin is determined through a method defined in JIS K 6220-1:2015 by means of a ring and ball softening point apparatus. The temperature at which a ball placed on a sample falls to a base plate by softening the sample is employed as the softening point.

As the styrene-based resin, there may be used a block polymer (thermoplastic elastomer) including a conjugated diene polymer block as a soft segment and a polystyrene block as a hard segment. Use of such a block polymer is preferred, since the effect of improving the anti-crack-propagation property can be further enhanced. Notably, in the conjugated diene polymer block contained in the block polymer, a part of carbon-carbon double bonds in structural units derived from the conjugated diene compound may be hydrogenated.

Examples of the conjugated diene compound forming the aforementioned conjugated diene polymer block include 1,3-butadiene, isoprene, 2,3-dimethyl-1,3-butadiene, 1,3-pentadiene, and 1,3-hexadiene. These conjugated diene compounds may be used singly or in combination of two or more species. Of these, at least one of 1,3-butadiene and isoprene is preferred as the conjugated diene compound. The conjugated diene unit content of the block polymer is preferably 20 mass% or more, more preferably 30 mass% or more. Also the conjugated diene unit content is preferably 80 mass% or less, more preferably 70 mass% or lower.

From the viewpoint of achieving a higher breaking strength, the ratio of the polystyrene-based block in the aforementioned block polymer is preferably 20 mass% or more. Also, the polystyrene-based block content is preferably 80 mass% or less, more preferably 70 mass% or less. Notably, the polystyrene-based block content, conjugated diene polymer block content, and conjugated diene unit content of the block polymer can be calculated by corresponding integral proportions obtained by a ¹H-NMR spectrum.

Specific examples of the aforementioned block polymer include styrene-butadiene block copolymer, styrene-isoprene block copolymer, an epoxidated product of styrene-butadiene block copolymer, styrene-butadiene block copolymer, and a block copolymer in which a part of conjugated diene polymer blocks of a styrene-isoprene block copolymer have been hydrogenated. More specific examples include styrene-butadiene-styrene block copolymer (SBS), styrene-isoprene-styrene block copolymer (SIS), styrene-butadiene-butylene-styrene block copolymer (SBBS), an epoxidated product of styrene-butadiene styrene block copolymer, and hydrogenated products of these copolymers. Among these block polymers, from the viewpoint of the presence of a sufficient number of cross-linking points, SBS and SIS having a conjugated diene-based polymer block in which a soft segment has not been hydrogenated and an epoxidized product of styrene-butadienestyrene block copolymer are preferably used.

Examples of the polyethylene species include low-density polyethylene (LDPE), high-density polyethylene (HDPE), and linear low-density polyethylene (LLDPE). The C5-type resin is a solid polymer (C5-type synthetic petroleum resin) obtained through polymerization of a C5 fraction in the presence of a Friedel-Crafts catalyst (e.g., AlCl₃ or BF₃). Specific examples of the C5-type resin include copolymers mainly formed from isoprene, cyclopentadiene, 1,3-pentadiene, 1-pentene, etc., 2-pentene-dicyclopentadiene copolymer, and a polymer mainly formed from 1,3-pentadiene.

The C9-type resin is a solid polymer (C9-type synthetic petroleum resin) obtained through polymerization of a C9 fraction in the presence of a Friedel-Crafts catalyst (e.g., AlCl₃ or BF₃). Specific examples of the C9-type resin include copolymers mainly formed from indene, methylindene, vinyltoluene, etc. The C5/C9-type resin is a solid polymer (C5/C9-type synthetic petroleum resin) obtained through polymerization of C5 to C9 fractions in the presence of a Friedel-Crafts catalyst (e.g., AlCl₃ or BF₃). Specific examples of the C5/C9-type resin include copolymers mainly formed from, for example, vinyltoluene and indene. From the viewpoint of compatibility with rubber components, the C5/C9-type resin preferably has a low C≥9 component content. Specifically, the C5/C9-type resin preferably has an amount of C≥9 components in the total amount of the resin less than 50 mass%, more preferably 40 mass% or less.

The dicyclopentadiene-based resin is a petroleum resin obtained mainly from dicyclopentadiene present in a C5 fraction. Specific examples of the dicyclopentadiene-based resin include "Markarez M" series (M-890A, M-845A, M-990A, etc.) (products of Maruzen Petrochemical Co., Ltd.). Examples of the alkylphenolic resin include alkylphenol acetylene resin such as p-tert-butylphenol acetylene resin; and alkylphenol-formaldehyde resin of low polymerization degree.

The terpene-based resin is a solid resin prepared by polymerizing turpentine (recovered in production of rosin from pine trees) or a polymerization component isolated therefrom in the presence of a Friedel-Crafts catalyst, and examples thereof include β-pinene resin and α-pinene resin. Commercial products of the terpene-based resin may also be used. Examples thereof include "Piccolyte" series (A115, S115, etc.) (products of Hercules).

A typical example of the terpene-aromatic compound-based resin is a terpene-phenolic resin. The terpene-phenolic resin may be prepared by reacting a terpene with various phenols in the presence of a Friedel-Crafts catalyst, or by such a process further including condensation with formalin. No particular limitation is imposed on the raw material terpene, and monoterpene hydrocarbons such as α-pinene and limonene are preferred. A monoterpene hydrocarbon including α-pinene is more preferred, with pure α-pinene being particularly preferred. In the present disclosure, a terpene-phenolic resin having a low phenolic content is preferred. The term "low phenol content" refers to the phenolic content of the total amount of the resin being less than 50 mass%, preferably 40 mass% or less. Notably, when a terpene-aromatic compound-based resin, in particular, a terpene-phenolic resin, is used as the resin (C), handling performance can also be enhanced further. Commercial products of the terpene-aromatic compound-based resin may be used. Examples of commercial products include "Tamanol 803L" and "Tamanol 901" (products of Arakawa Chemical Industries, Ltd.).

When the resin (C) is employed, the amount of the resin (C) to be added is preferably 1 part by mass or more, with respect to 100 parts by mass of the conjugated diene-based polymer (A) contained in the present composition. Use of the resin (C) in an amount of 1 part by mass or more is suitable, since the effect of improving the wear resistance, breaking strength, and anti-crack-propagation property of the cross-linked product obtained from the composition can be satisfactorily enhanced. The amount of the resin (C) to be added is more preferably 3 parts by mass or more, still more preferably 7 parts by mass or more, with respect to 100 parts by mass of the conjugated diene-based polymer (A). From the viewpoint of maintaining characteristics of the polymer composition at suitable levels, the amount of the resin (C) to be added is preferably 50 parts by mass or less, more preferably 30 parts by mass or less, still more preferably 25 parts by mass or less, with respect to 100 parts by mass of the conjugated diene-based polymer (A) contained in the composition. Notably, the resin (C) may be used singly or in combination of two or more species.

### ·Liquid polymer

The liquid polymer is a polymer having fluidity at room temperature (23°C). As the liquid polymer, a liquid polymer including structural unit derived from an unsaturated hydrocarbon monomer is preferably used. Specific examples include polybutadiene, polyisoprene, polyisobutylene, polybutene, styrene-butadiene copolymer, styrene-isoprene copolymer, butadiene-isoprene copolymer, isoprene-butadienestyrene copolymer, ethylene-α-olefin copolymer, ethylenepropylene-diene copolymer, and polyfarnesene. These liquid polymers may be modified through carboxylation, methacrylation, or the like, or hydrogenated. Examples of the modified product of the liquid polymer include maleic anhydride-modified polybutadiene and maleic acid-modified polybutadiene.

No particular limitation is imposed on the molecular weight of the liquid polymer. For example, the number average molecular weight (Mn) is preferably 600 or higher, more preferably 700 or higher. Also, Mn of the liquid polymer is preferably 50,000 or lower, more preferably 40,000 or lower, still more preferably 30,000 or lower.

The liquid polymer is commercially available. Examples of the commercial product of the liquid polymer include LIR-30, LIR-50, LIR-310, LIR-390, LIR-403, LIR-102M, LIR-290, LBR-302, LBR-302, LBR-307, LBR-352, LBR-352, L-SBR-820, and L-SBR-841 (product of Kuraray Co., Ltd.), NISSO-PB B-1000, NISSO-PB B-2000, NISSO-PB B-3000, NISSO-PB G-1000, NISSO-PB G-2000, NISSO-PB G-3000, NISSO-PB BI-2000, NISSO-PB BI-3000, NISSO-PB B-3000, and NISSO-JP-200 (products of Nippon Soda Co., Ltd.), HV-35 (product of ENEOS), and Lucant series (product of Mitsui Chemicals, Inc.). The liquid polymer may be used singly or in combination of two or more species.

In the case where a liquid polymer is added to the present composition, the liquid polymer content, with respect to 100 parts by mass of the conjugated diene-based polymer (A) contained in the present composition, is preferably 1 part by mass or higher. By adjusting the liquid polymer content to fall within the above range, the effect of improving processability of the polymer composition can be satisfactorily attained, which is advantageous. From such a viewpoint, the liquid polymer content, with respect to 100 parts by mass of the conjugated diene-based polymer (A), is more preferably 2 parts by mass or higher, still more preferably 5 parts by mass or higher. From the viewpoint of suppressing a drop in mechanical strength and wear resistance of the cross-linked product, the liquid polymer content, with respect to 100 parts by mass of the conjugated diene-based polymer (A), is preferably 30 parts by mass or lower, more preferably 20 parts by mass or lower.

The present composition contains a conjugated diene-based polymer (A) and an antioxidant, and as an optional component, an extending material. Notably, since the extending material is an optional component, the extending material content of the present composition may be 0 mass%. From the viewpoint of yielding a cross-linked product having high mechanical strength, the extending material content of the present composition, with respect to 100 parts by mass of the conjugated diene-based polymer (A), is preferably 30 parts by mass or lower, more preferably 25 parts by mass or lower, still more preferably 20 parts by mass or lower.

In mixing of the conjugated diene-based polymer (A) with the antioxidant, the conjugated diene-based polymer (A) from which the solvent has been removed may be mixed with the antioxidant (i.e., dry mixing), or the conjugated diene-based polymer (A) may be mixed with the antioxidant in a solvent (i.e., wet mixing). Alternatively, the present composition may be prepared through dry mixing and wet mixing in combination. When dry mixing and wet mixing are conducted in combination, the type and amount of the antioxidant may be the same or different between the two mixing styles. From the viewpoint of enhancing dispersibility of the antioxidant, in a preferred procedure, the conjugated diene-based polymer (A) is mixed with the antioxidant in a solvent, and then the solvent is removed from the mixture, to thereby prepare the present composition. From the viewpoint of yielding a polymer composition containing the antioxidant in a sufficient amount, while dispersibility of the antioxidant is enhanced, in an alternative procedure, the conjugated diene-based polymer (A) is mixed with the antioxidant in a solvent; the solvent is removed from the mixture, to thereby prepare a polymer composition; and the antioxidant is further added to the composition.

In the case where an extending material is incorporated into the present composition, no particular limitation is imposed on the mode of adding the extending material. In one possible manner, the conjugated diene-based polymer after completion of polymerization is mixed with an extending material, to thereby provide an oil-extended rubber. Alternatively, the extending material may be added together with other components such as a filler, during a kneading step to form a rubber compound (i.e., a compounded rubber). In the former case, the extending material may be added to the solvent-removed conjugated diene-based polymer. Alternatively, an extending oil may be added to a polymer solution or an aqueous dispersion containing the polymerization-completed conjugated diene-based polymer, and then the solvent is removed from the mixture, to thereby yield an oil-extended rubber.

One embodiment of the present composition is a polymer composition having a total amount of the conjugated diene-based polymer (A), the antioxidant, and the extending material of 90 mass% or more the entire amount of the composition (hereinafter may also be referred to as a "polymer composition P"). In the polymer composition P, the total amount of the conjugated diene-based polymer (A), the antioxidant, and the extending material is more preferably 95 mass% or more the entire amount of the polymer composition P, still more preferably 97 mass% or more, yet more preferably 98 mass% or more. Typically, the polymer composition P is a solid-form polymer composition containing no solvent. The polymer composition P may be in the form of solid particle (crumb), or of rubber bale obtained by compression-molding of crumbs into a shape of interest (e.g., rectangular parallelepiped).

Another embodiment of the present composition is a compounded product yielded by adding various additives which are generally employed in polymer compositions used for producing a cross-linked product such as a tire to the polymer composition P. The compounded product can be yielded by mixing the polymer composition P with various additives and preferably kneading the mixture by means of a kneader such as an open-type kneader (e.g., a roller) or a closed-type kneader (e.g., a Banbury mixer). By cross-linking (vulcanizing) the thus-obtained compounded product after molding, a cross-linked product (i.e., a vulcanized rubber) can be yielded. Examples of the various additives include the following components (D) to (G).

### Component (D): Additional rubber component

The present composition may further contain a rubber component differing from the conjugated diene-based polymer (A) (hereinafter may also be referred to as an "additional rubber component").

No particular limitation is imposed on the type of the additional rubber component, but an unmodified rubber is preferred. Specific examples of the additional rubber component include butadiene rubber (BR, e.g., high cis BR having a cis-1,4 bond content of 90% or higher), styrene-butadiene rubber (SBR), natural rubber (NR), isoprene rubber (IR), styrene-isoprene copolymer rubber, butadiene-isoprene copolymer rubber, hydrogenated butadiene rubber, and hydrogenated styrene-butadiene rubber. The amount of the additional rubber component to be added, with respect to the total amount of the rubber components (the conjugated diene-based polymer (A) and the additional rubber component) contained in the present composition as 100 parts by mass, is preferably 30 parts by mass or less, more preferably 10 parts by mass or less.

As used herein, the term "rubber component" refers to a polymer that can provide, through hardening, a cured product exhibiting rubber elasticity. The cured product exhibits such a property that the product is deformed at room temperature by small force (e.g., elongation by 2-fold or more by stretching at room temperature), and is rapidly returned substantially to the original shape when the force is removed. In the present specification, the conjugated diene-based polymer (A) and the additional rubber component(s) may also be referred to simply as a "rubber component" in a collective manner.

### Component (E): Filler

The filler may further be incorporated into the present composition for enhancing the mechanical strength of the cross-linked product. Examples of the filler include silica, carbon black, an inorganic compound represented by the following formula (2) (hereinafter may also be referred to as an "inorganic compound (N)"), and a reinforcing fiber (e.g., an inorganic fiber such as glass fiber or carbon fiber, or an organic fiber such as nylon fiber or polyester fiber). Among them, the filler is preferably at least one species selected from the group consisting of silica, carbon black, and an inorganic compound (N).

nM²·mSiOₖ·H₂O ··· (2)

(In formula (2), M² represents at least one species selected from the group consisting of a particular metal which is any of aluminum, magnesium, titanium, and calcium; an oxide of the particular metal; a hydroxide of the particular metal; and a carbonate of the particular metal; n is an integer of 1 to 5; m is an integer of 0 to 10; k is an integer of 2 to 5; and i is an integer of 0 to 10.)

Examples of the silica species include wet silica (hydrous silicate), dry silica (anhydrous silicate), colloidal silica, precipitated silica, calcium silicate, and aluminum silicate. Among them, wet silica is particularly preferred, from the viewpoints of the effect of improving rupture characteristics and the effect of achieving both wet grip performance and low rolling resistance. Also, use of a high dispersible type silica is preferred, from the viewpoints of enhancing dispersibility of silica in the present composition and improving physical properties and processability. Notably, the silica species may be used singly or in combination of two or more species. When silica is incorporated into the present composition, the relative amount of silica (the total amount, in the case two or more species of silica are used), with respect to the entire amount of the rubber component contained in the present composition as 100 parts by mass, is preferably 1 to 200 parts by mass, more preferably 5 to 150 parts by mass, still more preferably 10 to 120 parts by mass.

No particular limitation is imposed on the carbon black, and examples thereof include GPF, FEF, HAF, ISAF, and SAF. In the present composition, the relative amount of carbon black (the total amount, in the case two or more species of carbon black are used), with respect to the entire amount of the rubber component contained in the present composition as 100 parts by mass, is preferably 5 to 100 parts by mass, more preferably 20 to 50 parts by mass. In addition to silica and carbon black, various reinforcing fillers such as clay and calcium carbonate may further be added to the present composition as inorganic fillers.

Specific examples of the inorganic compound (N) include, in the case of a compound of aluminum as the particular metal, aluminum oxide, alumina monohydrate, aluminum hydroxide, aluminum carbonate, aluminum silicate, and aluminum calcium oxide (e.g., Al₂O₃·CaO·2SiO₄); in the case of a compound of magnesium as the particular metal, magnesium oxide, magnesium hydroxide, magnesium carbonate, magnesium silicate, magnesium calcium silicate (CaMgSiO₄), and talc; in the case of a compound of titanium as the particular metal, titanium oxide; and in the case of a compound of calcium as the particular metal, calcium oxide, calcium hydroxide, calcium carbonate and calcium silicate.

As the filler, one species among silica, carbon black, and the inorganic compound (N) may be used singly. Alternatively, the above species may also be used in combination of two or more species. From the viewpoint of a high effect of improving characteristics of tire by combination with the conjugated diene-based polymer (A), the present composition may employ silica as the filler. Specifically wet silica, dry silica, or colloidal silica is preferably used.

When the present composition contains a filler, the relative amount of the filler (the total amount, in the case two or more species of the filler are used) in the present composition, with respect to the entire amount of the rubber components contained in the present composition as 100 parts by mass, is preferably 5 to 300 parts by mass, more preferably 20 to 200 parts by mass, still more preferably 30 to 150 parts by mass.

### Component (F): Silane coupling agent

The present composition may further contain a silane coupling agent. When the present composition contains silica, further incorporation of a silane coupling agent successfully leads to further enhancement **in** the reinforcing effect by virtue of silica. No particular limitation is imposed on the silane coupling agent, but a sulfur-containing silane coupling agent is preferred. Examples of the sulfur-containing silane coupling agent include bis(3-triethoxysilylpropyl) tetrasulfide, bis(3-triethoxysilylpropyl) disulfide, 3-trimethoxysilylpropylbenzothiazole tetrasulfide, γ-mercaptopropyltriethoxysilane, 3-octanoylthiopropyltriethoxysilane, and (3-[ethoxybis(3,6,9,12,15-pentaoxaoctacosan-1-yloxy)silyl]-1-propanethiol.

When the silane coupling agent is incorporated into the present composition, the amount of the silane coupling agent to be added is preferably 1 to 20 parts by mass with respect to 100 mass of silica. By controlling the amount of the silane coupling agent to be added to 1 part by mass or more, with respect to 100 parts by mass of silica, the effect of improving dispersibility of silica can fully be attained. Also, when the amount of the silane coupling agent to be added is adjusted to 20 parts by mass or less, with respect to 100 parts by mass of silica, dispersibility of silica can be improved, while processability of the polymer composition and elongation at break of the cross-linked product are maintained at suitable levels. In the present composition, the amount of the silane coupling agent to be added, with respect to 100 parts by mass of silica, is more preferably 5 to 15 parts by mass. The silane coupling agent may be used singly or in combination of two or more species.

### Component (G): Cross-linking agent

Generally, the present composition contains a cross-linking agent. Examples of the cross-linking agent include sulfur, halogenated sulfur, an organic peroxide, a quinonedioxime, an organic polyvalent amine compound, and a methylol group-containing alkylphenol resin. Among them, sulfur is generally used. The amount of sulfur to be added, with respect to the total amount of the rubber components contained in the present composition as 100 parts by mass, is preferably 0.1 to 5 parts by mass, more preferably 0.5 to 3 parts by mass.

In production of a compounded product by compounding the polymer composition P with various additives, the aforementioned component (B) may be further added as such an additive to the polymer composition P. Similarly, the aforementioned component (C) may be added to the polymer composition P in production of a compounded product.

In addition to the aforementioned components, various additives which are generally employed in compounded products used for producing cross-linked products such as tires may be added to the present composition. Examples of such additives include zinc oxide (zinc flower), stearic acid, a softening agent, a vulcanization accelerator, a compatibilizer, a vulcanization aid, a processing aid, and an anti-scorching agent. The amount of each additive may be appropriately determined in accordance with each component, so long as the effects of the present disclosure are not impaired.

Instead of zinc oxide, or in addition to zinc oxide, a metal salt which forms metal ions may be appropriately added, wherein the metal of the metal salt is at least one member selected from the group consisting of zinc, cobalt, nickel, iron, copper, and manganese.

The cross-linked product obtained from the present composition can be applied to various rubber products and articles. Specifically, the cross-linked product is yielded by kneading a polymer composition in the form of rubber bale or crumb containing the conjugated diene-based polymer (A) and an antioxidant with optionally employed additives by means of a kneader, molding the kneaded product, and then cross-linking (vulcanizing) the molded product. The cross-linked product obtained from the present composition is applicable to wide ranges of uses. Specific examples include tire parts such as tire tread, under tread, carcass, sidewall, and bead; sealing materials such as packings, gaskets, weather strips, and O-rings; exterior/interior coating materials for vehicles including automobiles, marine vessels, aircraft, and trains; building materials; vibrationproof rubbers for industrial machines, facilities, etc.; hoses and hose covers such as diaphragms, rollers, radiator hoses, and air hoses; belts such as power-transmission belt; linings; dust boots; materials of medical apparatus; fenders; electric wire insulating materials; and other industrial products.

In a step of kneading the components, firstly, a polymer composition containing the conjugated diene-based polymer (A) and an optional additive other than additives for vulcanization (a cross-linking agent, a vulcanization accelerator, and a vulcanization aid) are melt-kneaded by means of a kneader (a first step). The kneading temperature employed in the first step may be appropriately set in accordance with the melting point, glass transition temperature, etc. of the conjugated diene-based polymer (A). Through melt kneading, the additives are mixed with the rubber component. As a result, there can be satisfactorily attained the effects, for example, enhancing the mechanical strength of a rubber product after vulcanization; achieving a suitable kneading processability of the polymer composition; and preventing deterioration of rubber possibly caused by radicals generated in kneading.

Subsequently, in accordance with needs, the temperature of the kneaded product obtained in the first step is returned to room temperature. Then, an additive for vulcanization is added to the kneaded product, and the resultant mixture is subjected to melt kneading by means of a kneader (a second step). The kneaded product obtained in the second step is molded, and then subjected to cross-linking (vulcanization), to thereby yield a cross-linked product.

According to the polymer composition of the present disclosure, there can be yielded a cross-linked product having high mechanical strength. The polymer composition of the present disclosure is particularly suited for use as a material of tires, preferably for forming one or both of treads and sidewalls of tires, more preferably for treads of tires.

Production of tires may be carried out through any customary method. In one procedure, a mixture of the polymer composition of the present disclosure with optionally added components is kneaded by means of a kneader, and the kneaded product is formed into a sheet. The sheet is placed at a predetermined position through a customary method, followed by performing vulcanization molding. As a result, rubber treads or rubber sidewalls or both are formed, to thereby yield a pneumatic tire.

According to the present disclosure as described above, the following means are provided.

### [Means 1]

A polymer composition containing a conjugated diene-based polymer having a functional group and an antioxidant, wherein the conjugated diene-based polymer having a functional group has, in the same molecule or different molecules thereof, a carboxy group and at least one nitrogen-containing group selected from the group consisting of a tertiary amino group, a nitrogen-containing aliphatic heterocyclic group, and a nitrogen-containing aromatic heterocyclic group.

### [Means 2]

A polymer composition according to [Means 1], wherein the conjugated diene-based polymer having a functional group includes a first polymer and a second polymer which differs from the first polymer; the first polymer has a plurality of carboxy groups; and the second polymer has a plurality of nitrogen-containing groups.

### [Means 3]

A polymer composition according to [Means 1], wherein the conjugated diene-based polymer having a functional group includes a polymer having a plurality of the carboxy groups and a plurality of the nitrogen-containing groups.

### [Means 4]

A polymer composition according to any of [Means 1] to [Means 3], which contains an extending material as an optional component, wherein the total amount of the conjugated diene-based polymer having a functional group, the antioxidant, and the extending material is 90 mass% or more the entire amount of the composition.

### [Means 5]

A polymer composition according to [Means 4], wherein the extending material is at least one species selected from the group consisting of a process oil, a vegetable oil, a resin, and a liquid polymer.

### [Means 6]

A polymer composition according to any of [Means 1] to [Means 5], wherein the conjugated diene-based polymer having a functional group includes a structural unit derived from a monomer having a carboxy group.

### [Means 7]

A polymer composition according to any of [Means 1] to [Means 6], further containing a cross-linking agent.

### [Means 8]

A cross-linked product formed by cross-linking the polymer composition of [Means 7].

### [Means 9]

A tire formed by use of the polymer composition of [Means 7].

### [Means 10]

A conjugated diene-based polymer having a plurality of carboxy groups, and a plurality of at least one species selected from the group consisting of a tertiary amino group, a nitrogen-containing aliphatic heterocyclic group, and a nitrogen-containing aromatic heterocyclic group.

### Examples

The present disclosure will next be described in detail by way of examples, which should not be construed as limiting the disclosure thereto. Unless otherwise specified, "part(s)" and "%" in the Synthesis Examples, Examples, and Comparative Examples are on the mass basis.

### 1. Synthesis of conjugated diene-based polymer [Synthesis Example 1: Synthesis of carboxy group-containing conjugated diene-based polymer (A1-1)]

To a reactor (capacity: 100 L) with a nitrogen atmosphere, water (41.1 L), sodium dodecyl diphenyl ether disulfonate (emulsifier) (670 g), potassium chloride (electrolyte) (7.5 g), sodium ethylenediaminetetraacetate (chelating agent) (9.5 g), and sodium hydrosulfite (oxygen remover) (19 g) were added. Subsequently, sodium ethylenediaminetetraacetate (3.99 g), ferrous sulfate (1.52 g), water (240 mL) containing sodium formaldehyde sulfoxylate (activator) (6.27 g), tert-dodecylmercaptan (chain-transfer agent) (57 g), and monomers: 1,3-butadiene (13.34 kg), styrene (3.78 kg), and methacrylic acid (798 g) were fed. The contents of the reactor were stirred at 330 rpm, and the temperature of the reactor contents was adjusted to 10°C. Thereafter, p-menthane hydroperoxide (polymerization initiator) (11.9 g) was added, to thereby initiate polymerization. Polymerization was conducted under temperature-controlled conditions (10°C). In the case where polymerization reaction did not proceed, an activator and an initiator were further added in an amount 10 to 50% the corresponding initially added amount.

After confirmation of the polymerization conversion to 70%, 6.3% aqueous N,N-diethylhydroxylamine (polymerization terminator) (900 mL) was added to the reaction system, to thereby terminate polymerization reaction. The reaction was added to a strip tank, and the pressure of the tank was reduced to -0.1 MPa. Then, the temperature was elevated to 60°C, where stripping was conducted for 30 minutes. Residual monomers were removed, to thereby isolate a synthetic rubber latex.

Next, distyrenized phenol (17 g) serving as an antioxidant was added to hot water at 90°C or higher. Calcium chloride (coagulant) was further added thereto so as to adjust the concentration to 0.1%. The contents were stirred to achieve dissolution, to thereby prepare an aqueous calcium chloride. After confirmation of sufficient dissolution of distyrenized phenol and calcium chloride, the latex obtained through the above polymerization process was put into aqueous calcium chloride (heated at 50°C or higher), to thereby precipitate the polymer as solidified rubber. Subsequently, the rubber was washed sequentially with water at 70°C, 50°C, and 20°C, and the washed rubber was dried by means of a hot air flow drier with an air temperature controlled at 90°C, to thereby yield a carboxy group-containing conjugated diene-based polymer (Al-1).

### [Synthesis Example 2: Synthesis of carboxy group-containing conjugated diene-based polymer (Al-2)]

The polymerization procedure of Synthesis Example 1 was repeated, except that the amounts of monomers fed were changed to 10.71 kg (1,3-butadiene), 7.57 kg (styrene), and 798 g (methacrylic acid), respectively, to thereby yield a carboxy group-containing conjugated diene-based polymer (Al-2).

### [Synthesis Example 3: Synthesis of nitrogen-containing conjugated diene-based polymer (A2-1)]

The polymerization procedure of Synthesis Example 1 was repeated, except that the type and amounts of monomers fed were changed to 1,3-butadiene (13.96 kg), styrene (2.33 kg), and 4-vinylpyridine (1.89 kg), respectively, to thereby yield a nitrogen-containing conjugated diene-based polymer (A2-1).

### [Synthesis Example 4: Synthesis of nitrogen-containing conjugated diene-based polymer (A2-2)]

The polymerization procedure of Synthesis Example 1 was repeated, except that the type and amounts of monomers fed were changed to 1,3-butadiene (11.27 kg), styrene (3.64 kg), and 4-vinylpyridine (3.78 kg), respectively, to thereby yield a nitrogen-containing conjugated diene-based polymer (A2-2).

### [Synthesis Example 5: Synthesis of nitrogen group-containing conjugated diene-based polymer (A2-3)]

The polymerization procedure of Synthesis Example 1 was repeated, except that the type and amounts of monomers fed were 1,3-butadiene (14.34 kg), styrene (3.78 kg), and dimethylaminoethyl methacrylate (798 g), respectively, to thereby yield a nitrogen-containing conjugated diene-based polymer (A2-3).

### [Synthesis Example 6: Synthesis of nitrogen group-containing conjugated diene-based polymer (A2-4)]

The polymerization procedure of Synthesis Example 1 was repeated, except that the type and amounts of monomers fed were changed to 1,3-butadiene (11.27 kg), styrene (3.64 kg), and dimethylaminoethyl methacrylate (3.78 kg), respectively, to thereby yield a nitrogen-containing conjugated diene-based polymer (A2-4).

### [Synthesis Example 7: Synthesis of carboxy group-/nitrogen-containing conjugated diene-based polymer (A3-1)]

The polymerization procedure of Synthesis Example 1 was repeated, except that the type and amounts of monomers fed were changed to 1,3-butadiene (13.21 kg), styrene (2.33 kg), methacrylic acid (798 g), and 4-vinylpyridine (1.89 kg), respectively, to thereby yield a carboxy group/nitrogen-containing conjugated diene-based polymer (A3-1).

### 2. Production and evaluation of polymer compositions (1)

### [Examples 1 to 7 and Comparative Examples 1 to 4]

To a conjugated diene-based polymer, 2,6-di-t-butyl-4-methylphenol serving as an antioxidant was added in an amount of 1 part by mass, with respect to 100 parts by mass of the conjugated diene-based polymer (the total amount of two conjugated diene-based polymers, when they were used), and the two components were mixed, to thereby yield a polymer composition P. Table 1 shows formulations of the yielded polymer compositions P. In Comparative Example 4, Process oil T-DAE (product of ENEOS) was further added as an extending material in an amount of 5 parts by mass, with respect to the total amount of the conjugated diene-based polymers as 100 parts by mass, to thereby yield a corresponding polymer composition P.

Subsequently, first-stage kneading of each polymer composition P was conducted by means of a plastomill (capacity: 250 cc) equipped with a temperature controlling device at a filling rate of 72% and a rotation rate of 60 rpm. Then, second-stage kneading was conducted. Specifically, a polymer composition P kneaded in the first kneading stage was cooled to room temperature, and the sulfur and a vulcanization accelerator were added. The mixture was kneaded, to thereby prepare a compounded product. The thus-obtained compounded product was molded, and the molded product was vulcanized by means of a vulcanization press apparatus at 160°C for a predetermined time. The following characteristics were assessed. Table 1 shows the type and component formulations of the conjugated diene-based polymers employed in the Examples and Comparative Examples.

### <Tensile test>

A sample of vulcanized rubber was subjected to a tensile test in accordance with JIS K6251:2010. The test sample was a dumbbell test piece No. 3. The stress at break (TB, unit: MPa) and elongation at break (EB, unit: %) were measured at room temperature. The greater the values of TB and EB, the greater the breaking strength; i.e., high mechanical strength of the material, which is preferred. Based on the tensile product (TB×EB), tensile strength was calculated. The measurements of the stress at break (TB), elongation at break (EB), and tensile product (TB×EB) were evaluated as an index with respect to the corresponding value of Comparative Example 3 as 100. The greater the tensile product, the greater the mechanical strength, which is preferred. Table 1 shows the results. In addition, tensile stress at 100% elongation M₁₀₀ (MPa) and elongation ratio at break λ_{B} were determined. The value of "λ_{B}×M₁₀₀^{0.75}" was calculated as an index for toughness, and the calculated values were compared. The greater the value of "λ_{B}×M₁₀₀^{0.75}", the higher the mechanical strength, which is preferred.

### <Adhesion resistance to metal surface>

After recovery of a kneaded polymer composition from the plastomill, the state of adhesion of the polymer composition was observed. When no adhesion of the polymer composition was observed to a kneading part of the plastomill, the state is assessed as "O", whereas when adhesion was observed, the state "X".

**[Table 1]**

| | | | | | Comparative Example 1 | Example 1 | Example 2 | Comparative Example 2 | Example 3 | Example 4 | Example 5 | Example 6 | Comparative Example 3 | Comparative Example 4 | Example 7 |
|---|---|---|---|---|---|---|---|---|---|---|---|---|---|---|---|
| Formulation | Polymer composition P | Conjugated diene-based polymer | Polymer (A1) | (A1-1) | 100 | 75 | 50 | | | | | | 50 | 50 | |
| | | | | (A1-2) | | | | 100 | 75 | 50 | 75 | 50 | | | |
| | | | Polymer (A2) | (A2-1) | | | | | | | | 50 | | | |
| | | | | (A2-2) | | 25 | 50 | | | | 25 | | | | |
| | | | | (A2-3) | | | | | 25 | 50 | | | | | |
| | | | | (A2-4) | | | | | | | | | | | |
| | | | Polymer (A3) | (A3-1) | | | | | | | | | | | 100 |
| | | | SBR *1 | | | | | | | | | | 50 | 50 | |
| | | Antioxidant *2 | | | 1 | 1 | 1 | 1 | 1 | 1 | 1 | 1 | 1 | 1 | 1 |
| | | Extending material *3 | | | | | | | | | | | | 5 | |
| | Vulcanization accelerator 1 *4 | | | | 1 | 1 | 1 | 1 | 1 | 1 | 1 | 1 | 1 | 1 | 1 |
| | Vulcanization accelerator 2 *5 | | | | 1 | 1 | 1 | 1 | 1 | 1 | 1 | 1 | 1 | 1 | 1 |
| | Sulfer | | | | 1 | 1 | 1 | 1 | 1 | 1 | 1 | 1 | 1 | 1 | 1 |
| Evaluation | EB | | | | 98 | 101 | 96 | 100 | 113 | 117 | 67 | 112 | 100 | 115 | 119 |
| | TB | | | | 217 | 354 | 331 | 370 | 322 | 252 | 530 | 294 | 100 | 85 | 265 |
| | Tensile product | | | | 212 | 357 | 317 | 368 | 363 | 296 | 356 | 329 | 100 | 98 | 315 |
| | Adhesion resistance to metal surface | | | | × | ○ | ○ | × | ○ | ○ | ○ | ○ | × | × | ○ |
| | Toughness (λ_{B}×M100^{0.75}) | | | | 6.1 | 7.3 | 7.0 | 8.0 | 7.4 | 6.6 | 7.1 | 6.8 | 3.6 | 3.4 | 7.5 |

Details of the components in Table 1 are as follows (the same being applicable to Tables 2 and 3).
*1) styrene-butadiene rubber "SBR1502" (product of ENEOS Material)
*2) 2,6-di-t-butyl-4-methylphenol
*3) Process oil T-DAE (product of ENEOS)
*4) "Nocceler D" (product of Ouchi Shinko Chemical Industrial Co., Ltd.)
*5) "Nocceler CZ" (product of Ouchi Shinko Chemical Industrial Co., Ltd.)

As shown in Table 1, in Examples 1 to 7 in which cross-linked products were yielded from a polymer composition P containing the conjugated diene-based polymer (A), cross-linked products having high mechanical strength were successfully yielded, while adhesion of the conjugated diene-based polymer onto a metal surface was suppressed. Particularly, in Examples 1 and 3 in which the amount of the conjugated diene-based polymer (A2) was adjusted to be smaller than that of the conjugated diene-based polymer (A1), the mechanical strength of the cross-linked products tended to be higher, as compared with Examples 2 and 4 in which the same conditions were employed except that the ratio of the amount of conjugated diene-based polymer (A1) to that of the conjugated diene-based polymer (A2).

In contrast, in Comparative Examples 1 and 2 employing only the carboxy group-containing conjugated diene-based polymer (A1), the conjugated diene-based polymer was readily adhered to a metal surface, resulting in unsatisfactory processability. Also, in Comparative Examples 3 and 4 in which an unmodified styrene-butadiene rubber was used instead of the conjugated diene-based polymer (A2), the conjugated diene-based polymer was readily adhered to a metal surface, and the mechanical strength of the cross-linked products was low, as compared with Examples 1 to 7.

### 3. Production and evaluation of polymer compositions (2)

### [Examples 8 to 14 and Comparative Examples 5 to 8]

To a conjugated diene-based polymer, 2,6-di-t-butyl-4-methylphenol serving as an antioxidant was added in an amount of 1 part by mass, with respect to 100 parts by mass of the conjugated diene-based polymer (the total amount of two conjugated diene-based polymers, when they were used), and the two components were mixed, to thereby yield a polymer composition P. Table 2 shows formulations of the yielded polymer compositions P. In Examples 8 and 11 and Comparative Example 8, Process oil T-DAE (product of ENEOS) was further added as an extending material in an amount of 5 parts by mass, with respect to the total amount of the conjugated diene-based polymers as 100 parts by mass, to thereby yield a corresponding polymer composition P.

Subsequently, first-stage kneading of each polymer composition P with zinc oxide was conducted by means of a plastomill (capacity: 250 cc) equipped with a temperature controlling device at a filling rate of 72% and a rotation rate of 60 rpm. Then, second-stage kneading was conducted. Specifically, a mixture of a polymer composition P kneaded in the first kneading stage and zinc oxide was cooled to room temperature, and the sulfur and a vulcanization accelerator were added. The resultant mixture was kneaded, to thereby prepare a compounded product. The thus-obtained compounded product was molded, and the molded product was vulcanized by means of a vulcanization press apparatus at 160°C for a predetermined time. The aforementioned characteristics (tensile test and adhesion resistance to metal surface) were assessed. Table 2 shows the type and component formulations of the conjugated diene-based polymers employed in the Examples and Comparative Examples, and the results of assessment. The measurements of the stress at break (TB), elongation at break (EB), and tensile product (TB×EB) were evaluated as an index with respect to the corresponding value of Comparative Example 7 as 100.

**[Table 2]**

| | | | | | Comparative Example 5 | Example 8 | Example 9 | Comparative Example 6 | Example 10 | Example 11 | Example 12 | Example 13 | Comparative Example 7 | Comparative Example 8 | Example 14 |
|---|---|---|---|---|---|---|---|---|---|---|---|---|---|---|---|
| Formulation | Polymer composition P | Conjugated diene-based polymer | Polymer (A1) | (A1-1) | 100 | 75 | 50 | | | | | | 50 | 50 | |
| | | | | (A1-2) | | | | 100 | 75 | 50 | 75 | 50 | | | |
| | | | Polymer (A2) | (A2-1) | | | | | | | | 50 | | | |
| | | | | (A2-2) | | 25 | 50 | | | | 25 | | | | |
| | | | | (A2-3) | | | | | 25 | 50 | | | | | |
| | | | | (A2-4) | | | | | | | | | | | |
| | | | Polymer (A3) | (A3-1) | | | | | | | | | | | 100 |
| | | | SBR *1 | | | | | | | | | | 50 | 50 | |
| | | Antioxidant *2 | | | 1 | 1 | 1 | 1 | 1 | 1 | 1 | 1 | 1 | 1 | 1 |
| | | Extending material *3 | | | | 5 | | | | 5 | | | | 5 | |
| | Zinc oxide | | | | 3 | 3 | 3 | 3 | 3 | 3 | 3 | 3 | 3 | 3 | 3 |
| | Vulcanization accelerator 1 *4 | | | | 1 | 1 | 1 | 1 | 1 | 1 | 1 | 1 | 1 | 1 | 1 |
| | Vulcanization accelerator 2 *5 | | | | 1 | 1 | 1 | 1 | 1 | 1 | 1 | 1 | 1 | 1 | 1 |
| | Sulfer | | | | 1 | 1 | 1 | 1 | 1 | 1 | 1 | 1 | 1 | 1 | 1 |
| Evaluation | EB | | | | 96 | 100 | 112 | 62 | 80 | 116 | 70 | 107 | 100 | 110 | 132 |
| | TB | | | | 217 | 305 | 307 | 249 | 212 | 145 | 397 | 226 | 100 | 85 | 340 |
| | Tensile product | | | | 208 | 306 | 346 | 155 | 170 | 168 | 276 | 241 | 100 | 94 | 449 |
| | Adhesion resistance to metal surface | | | | × | ○ | ○ | × | ○ | ○ | ○ | ○ | × | × | ○ |
| | Toughness (λ_{B}×M100^{0.75}) | | | | 8.6 | 10.5 | 10.6 | 9.7 | 7.3 | 6.0 | 13.5 | 8.4 | 4.8 | 4.7 | 14.8 |

As shown in Table 2, also in Examples 8 to 14 in which vulcanized rubbers were yielded from a polymer composition P containing the conjugated diene-based polymer (A) with further added zinc oxide, cross-linked products having high mechanical strength were successfully yielded, while adhesion of the conjugated diene-based polymer onto a metal surface was suppressed.

In contrast, in Comparative Examples 5 and 6 employing only the carboxy group-containing conjugated diene-based polymer (Al), the conjugated diene-based polymer was readily adhered to a metal surface, resulting in unsatisfactory processability. Also, in Comparative Examples 7 and 8 in which an unmodified styrene-butadiene rubber was used instead of the conjugated diene-based polymer (A2), the conjugated diene-based polymer was readily adhered to a metal surface, and the mechanical strength of the cross-linked products was low, as compared with Examples 8 to 14.

### [Comparative Examples 9 to 12]

The procedure employed in Examples 8 to 14 and Comparative Examples 5 to 8 was repeated according to the formulations shown in Table 3, except that only the conjugated diene-based polymer (A2) was used as the conjugated diene-based polymer, without using conjugated diene-based polymer (Al), to thereby yield a corresponding polymer composition P and a compounded product thereof, which were assessed. Table 3 shows the results of assessment. The measurements of the stress at break (TB), elongation at break (EB), and tensile product (TB×EB) were evaluated as an index with respect to the corresponding value of Comparative Example 7 as 100. Table 3 also shows the results of Examples 10, 9, and 13 for the purpose of comparison.

**[Table 3]**

| | | | | | Comparative Example 9 | Example 10 | Comparative Example 10 | Example 9 | Comparative Example 11 | Example 13 | Comparative Example 12 | Comparative Example 7 |
|---|---|---|---|---|---|---|---|---|---|---|---|---|
| Formulation | Polymer composition P | Conjugated diene-based polymer | Polymer (A1) | (A1-1) | | | | 50 | | | | 50 |
| | | | | (A1-2) | | 75 | | | | 50 | | |
| | | | Polymer (A2) | (A2-1) | | | | | | 50 | 100 | |
| | | | | (A2-2) | | | | 50 | 100 | | | |
| | | | | (A2-3) | | 25 | 100 | | | | | |
| | | | | (A2-4) | 100 | | | | | | | |
| | | | Polymer (A3) | (A3-1) | | | | | | | | |
| | | | SBR *1 | | | | | | | | | 50 |
| | | Antioxidant *2 | | | 1 | 1 | 1 | 1 | 1 | 1 | 1 | 1 |
| | | Extending material *3 | | | | | | | | | | |
| | Zinc oxide | | | | 3 | 3 | 3 | 3 | 3 | 3 | 3 | 3 |
| | Vulcanization accelerator 1 *4 | | | | 1 | 1 | 1 | 1 | 1 | 1 | 1 | 1 |
| | Vulcanization accelerator 2 *5 | | | | 1 | 1 | 1 | 1 | 1 | 1 | 1 | 1 |
| | Sulfer | | | | 1 | 1 | 1 | 1 | 1 | 1 | 1 | 1 |
| Evaluation | EB | | | | 118 | 80 | 104 | 112 | 120 | 107 | 152 | 100 |
| | TB | | | | 36 | 212 | 57 | 307 | 140 | 226 | 90 | 100 |
| | Tensile product | | | | 42 | 170 | 59 | 346 | 168 | 241 | 137 | 100 |
| | Adhesion resistance to metal surface | | | | ○ | ○ | ○ | ○ | ○ | ○ | ○ | × |
| | Toughness (λ_{B}×M100^{0.75}) | | | | 2.0 | 7.3 | 2.9 | 10.6 | 8.1 | 8.4 | 6.6 | 4.8 |

In Example 9 and Comparative Example 11, the same formulation was employed, except the type and amounts of the conjugated diene-based polymer. In comparison, the values of the tensile product and toughness were higher in Example 9 than in Comparative Example 11, thereby yielding a cross-linked product having high mechanical strength. Similarly, in comparison, the values of the tensile product and toughness were higher in Example 10 than in Comparative Example 10, thereby yielding a cross-linked product having higher mechanical strength. Also, in comparison, the values of the tensile product and toughness were higher in Example 13 than in Comparative Example 12, thereby yielding a cross-linked product having higher mechanical strength.

## Claims

1. A polymer composition comprising:
a conjugated diene-based polymer comprising a functional group; and
an antioxidant,
wherein the conjugated diene-based polymer comprising a functional group comprises, in the same molecule or different molecules thereof, a carboxy group and at least one nitrogen-containing group selected from the group consisting of a tertiary amino group, a nitrogen-containing aliphatic heterocyclic group, and a nitrogen-containing aromatic heterocyclic group.

2. The polymer composition according to claim 1, wherein the conjugated diene-based polymer comprising a functional group comprises a first polymer and a second polymer which differs from the first polymer,
the first polymer comprises a plurality of carboxy groups, and
the second polymer comprises a plurality of nitrogen-containing groups.

3. The polymer composition according to claim 1, wherein the conjugated diene-based polymer comprising a functional group comprises a polymer comprising a plurality of the carboxy groups and a plurality of the nitrogen-containing groups.

4. The polymer composition according to any one of claims 1 to 3, comprising an extending material as an optional component,
wherein the total amount of the conjugated diene-based polymer comprising a functional group, the antioxidant, and the extending material is 90 mass% or more the entire amount of the composition.

5. The polymer composition according to claim 4, wherein the extending material is at least one species selected from the group consisting of a process oil, a vegetable oil, a resin, and a liquid polymer.

6. The polymer composition according to any one of claims 1 to 3, wherein the conjugated diene-based polymer comprising a functional group comprises a structural unit derived from a monomer comprising a carboxy group.

7. The polymer composition according to any one of claims 1 to 3, further comprising a cross-linking agent.

8. A cross-linked product formed by cross-linking the polymer composition according to claim 7.

9. A tire formed by applying the polymer composition according to claim 7.

10. A conjugated diene-based polymer comprising a plurality of carboxy groups, and a plurality of at least one species selected from the group consisting of a tertiary amino group, a nitrogen-containing aliphatic heterocyclic group, and a nitrogen-containing aromatic heterocyclic group.
